# EUROPEAN PATENT APPLICATION

(11) **EP 2 056 019 A1**
(43) Date of publication of application: **06.05.2009**
(21) Application number: 08018945.9
(22) Date of filing: 30.10.2008
(51) Int. Cl.: F21V 11/02, G02B 5/00

(54) **Screen, particularly for lamps**

(30) Priority: 31.10.2007 IT VI20070290
(71) Applicant: Turn Lights S.R.L., 36100 Vicenza (VI) (IT)
(72) Inventor: Bianchi, Nereo, 36042 Breganze (Vicenza) (IT)
(74) Representative: Forattini, Amelia

(57) **Abstract**

A screen for lamps has a screening body, which can be associated with a light source and is substantially transparent and suitable to form a lighting surface. A plurality of transverse separation surfaces are formed on the screening body, transversely to the lighting surface.

## Description

The present invention relates to a screen, particularly for lamps.

As is known, lamps fitted with fluorescent tubes or with equivalent light sources, such as for example electroluminescent strips, light conductors or optical fibers, are generally provided with screens that are adapted to make the lighting more comfortable and to provide the lamps with mechanical protection.

The screens that have been used so far are substantially of two types. A first type is constituted by transparent or opalescent glass or plastic enclosures inside which the light source is placed.

Those screens are generally provided with internal or external prismatic surfaces that contribute to reduce the luminance of the lamp and attenuate dazzling.

Although screens of that type ensure a good protection of the light sources from a mechanical standpoint, they have drawbacks linked mainly to the limited heat exchange that they allow to the tubes.

That circumstance considerably affects the microclimate inside the lamp, causing an increase in temperature and the consequent significant reduction in the efficiency of the light source.

In screens of the second type, the screening members are constituted by blades made of opaque or translucent material, which are arranged according to different geometries.

While, with respect to the first type, the second type has the advantage of allowing maximum heat exchange with the surrounding atmosphere, on the other hand it ensures less protection to the tube, which is more exposed to breakages caused by more or less accidental contacts.

The aim of the invention is to solve the problems described above, providing a screen, particularly for lamps, which provides an aesthetic function and allows to control the luminance and the dazzling angle and the simultaneous mechanical protection of the light source.

Within the scope of this aim, a particular object of the invention is to provide a screen which, beyond a certain viewing angle, is able to limit the luminance of the light source with respect to an observer.

A further object of the invention is to provide a screen that ensures adequate heat exchange to the light source, keeping it at a temperature that is close to the temperature at which it reaches maximum luminous efficiency.

A further object of the invention is to provide a screen that is simple to manufacture and is advantageous from a purely economic standpoint.

This aim, as well as the mentioned objects and others that will become better apparent hereinafter, are achieved by a screen, particularly for lamps, comprising at least one screening body, which can be associated with a light source and is suitable to form a lighting surface, said screening body being substantially transparent, characterized in that it comprises a plurality of transverse separation surfaces formed on said screening body transversely to said lighting surface.

Further characteristics and advantages will become better apparent from the description of preferred but not exclusive embodiments of a screen according to the invention, illustrated by way of non-limiting example in the accompanying drawings, wherein:
Figure 1 is a perspective view of a screen according to the invention;
Figure 2 is a plan view of the screen of the preceding figure;
Figure 3 is a plan view of a screen according to a further aspect of the invention;
Figure 4 is a plan view of a screen according to still a further aspect of the invention;
Figure 5 is a perspective view of a screen according to still a further aspect of the invention;
Figure 6 is a plan view of the screen of the preceding figure.

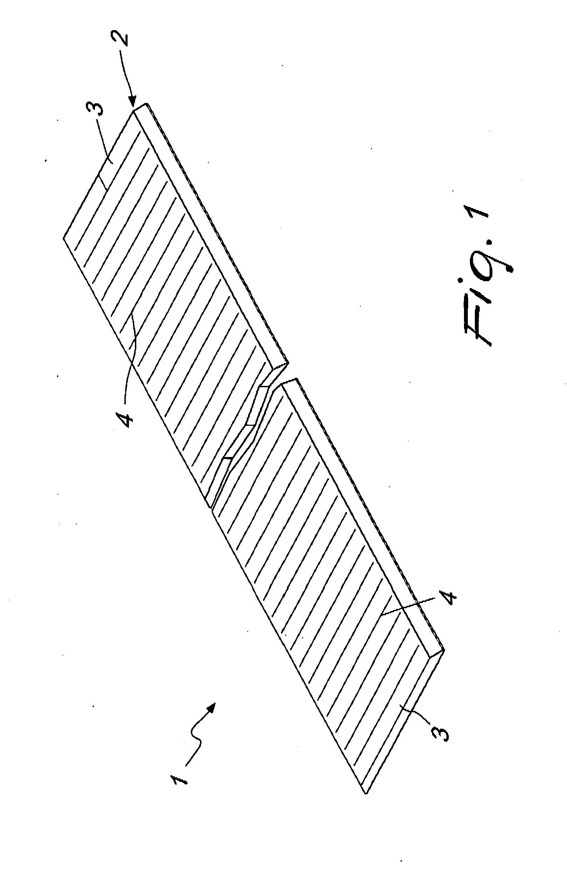

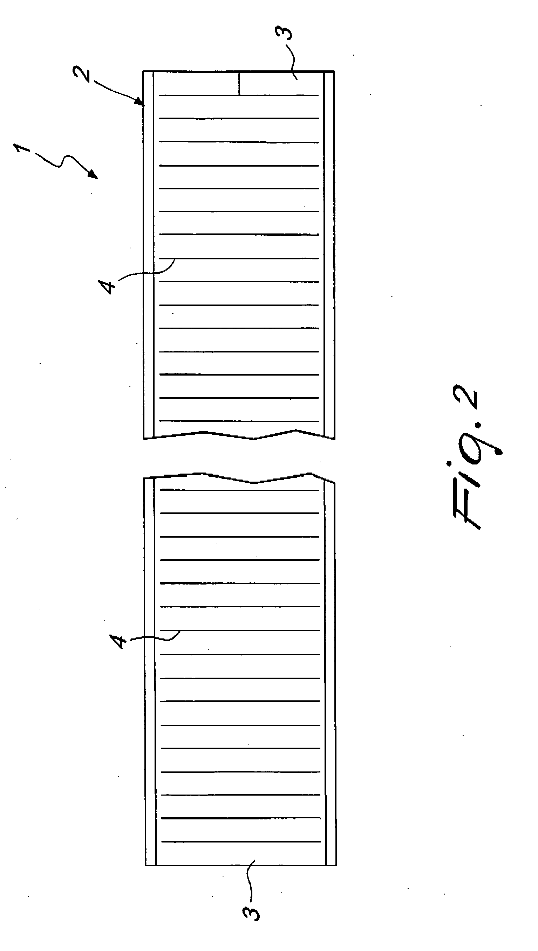

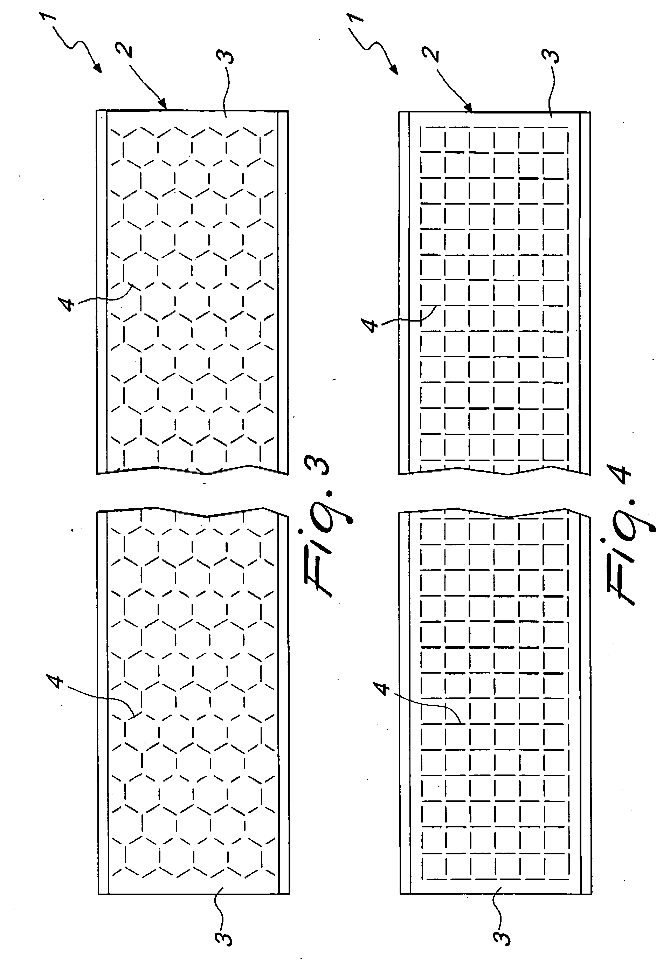

With reference to Figures 1 to 4, the screen according to the invention, generally designated by the reference numeral 1, comprises a substantially transparent screening body, made for example of glass, crystal glass, ceramic materials or synthetic materials that are already per se known in the art.

The shape and structure of the screening body are improved so as to allow its association with a light source, which is not shown in the accompanying figures but is constituted for example by a fluorescent tube or by another equivalent source, in order to protect it and form a lighting surface 2.

According to the invention, the screen 1 comprises a plurality of transverse separation surfaces, which are formed on the screening body with different shapes and proportions, but with an arrangement that is transverse with respect to the lighting surface 2.

More particularly, the angle of incidence of the transverse separation surfaces with respect to the lighting surface 2 can be differentiated according to the design specifications and can be adapted to the circumstances of the specific case.

Preferably, considering a plan view of the screening body, the transverse separation surfaces are straight and substantially parallel to each other; however, as an alternative they can be arranged in a grid, so as to form polygons which are not necessarily regular, or can be shaped with the most disparate shapes.

According to a first aspect of the invention, in which the screening body is constituted by a monolithic structure 3, the transverse separation surfaces are defined by a plurality of blind or through microincisions 4, obtained for example by means of laser cutting machines, water jet cutting machines, milling machines or similar devices.

The width and depth of the microincisions 4, as well as their angle of incidence with respect to the lighting surface 2, can be determined during construction and can be changed so as to ensure adequate screening and ensure high efficiency to the light source.

In order to increase the effectiveness of the screen 1, the lighting surface 2 and the face of the screening body that lies opposite thereto can be rendered translucent, with treatments that are per se already known, or can be provided with a filtering film.

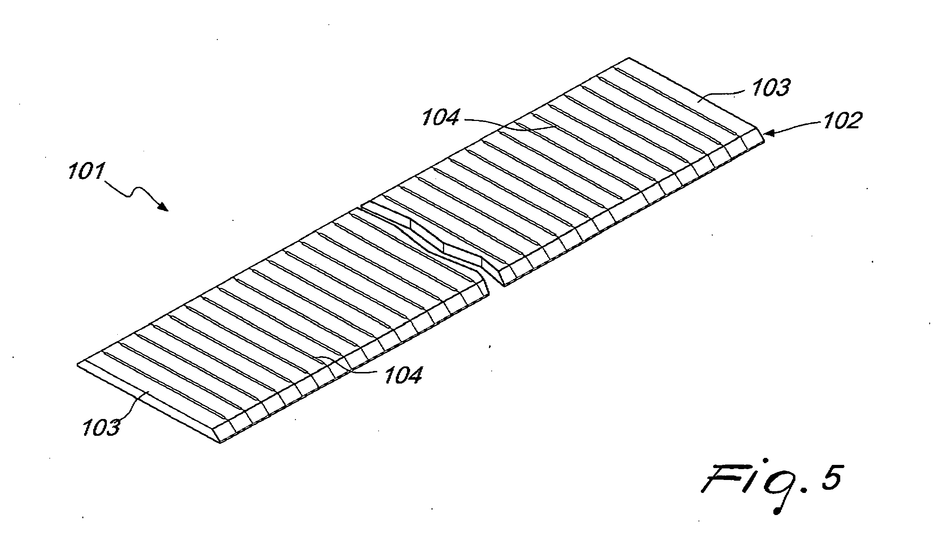

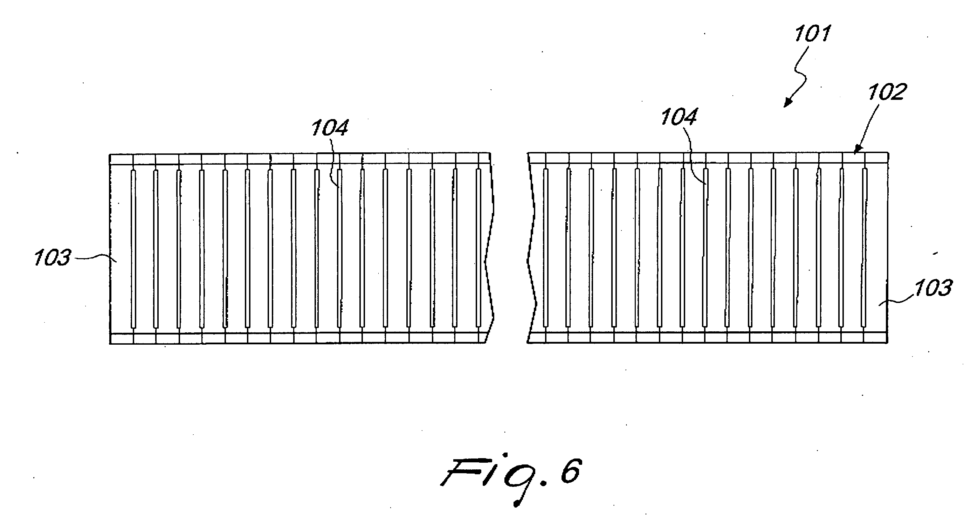

According to another aspect of the invention, shown in the accompanying Figures 5 and 6, in which the screen according to the invention has been designated by the reference numeral 101, the screening body is formed by a plurality of prismatic members 103, which are juxtaposed and mutually joined so as to form a single body.

In this case, the screening body therefore assumes a modular structure and the transverse separation surfaces are formed by the lateral faces of the prismatic members 103, which can be flat and adhere to each other or can be partially spaced by a concave shaping 104.

If the distance between the prismatic members 103 is such as to avoid any contact between their lateral faces, they may be supported by a substantially transparent substrate or by an appropriately provided frame.

In the embodiment shown in Figures 5 and 6, the members that correspond to the members that have already been described with reference to the embodiment shown in Figures 1 to 4 have been designated by the same reference numerals.

The operation of the screen according to the invention is described hereinafter.

The screen, respectively designated by the reference numerals 1 and 101, is associated with the light source to be protected, so that the transverse separation surfaces are arranged transversely thereto, with the most suitable angle, and so that the lighting surface 2 is directly or indirectly oriented toward the space to be lit.

The rays that originate from the light source and encounter the surface of the screening body that lies opposite the lighting surface 2, by passing from a less refractive optical medium to a more refractive one, propagate within the screening body, undergoing a deflection that is governed by the known laws of refraction, partly becoming incident to the lighting surface 2 and partly becoming incident to the transverse separation surfaces.

While the refracted rays that encounter the lighting surface 2 emerge directly therefrom and are diffused into the space to be lit, the ones that are incident to the transverse separation surfaces, if their angle of incidence is greater than a given limit angle, by having to pass from a more refractive optical medium to a less refractive one, can undergo multiple total reflections, which make them propagate within the portion of the screening body that is included between two successive transverse separation surfaces, which acts as a waveguide, before encountering the lighting surface 2.

As a consequence of this fact, the transverse separation surfaces allow a heat exchange between the light source and the space to be lit, by means of the microincisions 4 or by means of the gaps formed by the combination of the concave shapings 104, and also allow to reduce dazzling and control the direction of the rays emitted by the light source, screening them beyond a certain viewing angle.

In practice it has been found that the screen according to the invention fully achieves the intended aim, since it ensures control of luminance and dazzling and simultaneously ensures the mechanical protection of the light source.

The screen according to the invention ensures adequate heat exchange to the light source, keeping it at a temperature that is proximate to the temperature at which it reaches maximum luminous efficiency.

This application claims the priority of Italian Patent Application No. VI2007A000290, filed on October 31, 2007, the subject matter of which is incorporated herein by reference.

## Claims

1. A screen, particularly for lamps, comprising at least one screening body, which can be associated with a light source and is suitable to form a lighting surface, said screening body being substantially transparent, **characterized in that** it comprises a plurality of transverse separation surfaces formed on said screening body transversely to said lighting surface.

2. The screen according to the preceding claim, **characterized in that** said transverse separation surfaces are substantially straight.

3. The screen according to one or more of the preceding claims, **characterized in that** said transverse separation surfaces are contoured.

4. The screen according to one or more of the preceding claims, **characterized in that** said transverse separation surfaces are substantially mutually parallel.

5. The screen according to one or more of the preceding claims, **characterized in that** said transverse separation surfaces are arranged in a grid.

6. The screen according to one or more of the preceding claims, **characterized in that** said screening body comprises a plurality of microincisions, which are suitable to form said transverse separation surfaces, said screening body having a monolithic structure.

7. The screen according to one or more of the preceding claims, **characterized in that** said microincisions are through microincisions.

8. The screen according to one or more of the preceding claims, **characterized in that** said screening body comprises a plurality of prismatic members that form said transverse separation surfaces, said screening body having a modular structure.

9. The screen according to one or more of the preceding claims, **characterized in that** side faces of said prismatic members comprise a shaping that is suitable to form said transverse separation surfaces.

10. The screen according to one or more of the preceding claims, **characterized in that** said screening body comprises at least one translucent surface.

11. The screen according to one or more of the preceding claims, **characterized in that** said screening body comprises at least one filtering film.
